Europäisches Patentamt

European Patent Office

Office européen des brevets

(11) Publication number: **0 308 164**
**A1**

## EUROPEAN PATENT APPLICATION

(21) Application number: 88308424.6

(51) Int. Cl.⁴: **G02B 6/34**

(22) Date of filing: 12.09.88

(30) Priority: 14.09.87 GB 8721604

(43) Date of publication of application:
22.03.89 Bulletin 89/12

(84) Designated Contracting States:
AT BE CH DE ES FR GB GR IT LI LU NL SE

(71) Applicant: BRITISH TELECOMMUNICATIONS
public limited company
British Telecom Centre, 81 Newgate Street
London EC1A 7AJ(GB)

(72) Inventor: Nicholls, Simon Thomas
Jasmine The Street Earl Sohan
Woodbridge Suffolk IP13 7SA(GB)
Inventor: Scott, Michael J.
22 Chainhouse Road
Needham Market Suffolk(GB)

(54) Optical filter.

(57) In a method of manufacturing an optical filter a monomode optical fibre (4) is mounted in a channel(6) of a silica block (5). The upper surface (10) is lapped and polished to expose a portion of the fibre core (2) to provide a polished half coupler (PHC). A thin film (7) of index matched UV curable adhesive is applied to the PHC and an ultrasonic source (8) is used to set up a standing wave in the film (7) which is then rapidly cured using a high intensity UV source (9).

FIG 2C

## OPTICAL FILTER

The present invention relates to an optical filter and more particularly to a method of manufacturing such a filter.

It is known to provide an optical filter by overlaying a periodic structure onto a polished half coupler. In one such filter of the kind comprising an optical waveguide having a distributed Bragg Reflector, light of a wavelength which satisfies the Bragg condition is reflected back along the guide at 180 to the original direction of propagation.

One known method of providing the reflector is to apply a diffraction grating to an optical fibre. However, preparing such a grating requires a high degree of skill and accuracy. Consequently time consuming manufacture and high rejection rates may be expected resulting in an expensive filter.

Accordingly it is one object of the present invention to provide an effective optical filter which is less costly to manufacture.

According to the present invention there is provided a method of manufacturing an optical filter comprising the steps of lapping or polishing an optical fibre to expose a portion of fibre core, overlaying the exposed core portion with a curable adhesive, setting up a standing wave in the adhesive and rapidly curing the adhesive whereby a corrugated structure is provided.

Preferably an index matching ultra violet curable adhesive is used, curing being effected by use of a high intensity ultra violet light source.

The standing wave is preferably set up using an ultrasonic wave, the frequency of which may be varied during the curing period to provide a chirped structure to the corrugations.

A method of manufacturing an optical filter in accordance with the invention will now be described by way of example only with reference to the accompanying drawings of which:-

Figure 1 shows schematically a section through an optical fibre manufactured in accordance with the invention;

Figures 2A-F show schematically the manufacturing process; and

Figure 3 shows schematically a part of the filter showing a standing wave set up during manufacture.

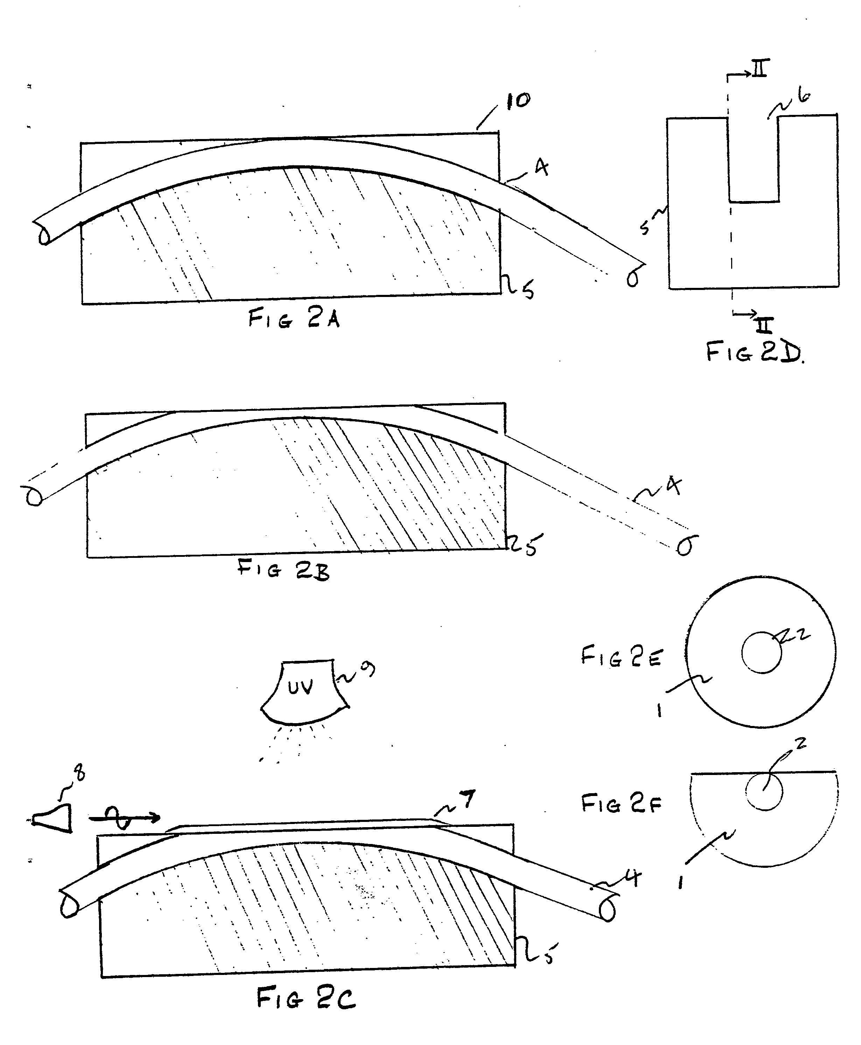

Before considering the preferred method of manufacturing an optical filter the product of the process will be considered in respect of the technical background. Accordingly, referring to Figure 1, a section through a polished half coupler(PHC) shows the PHC comprising a cladding layer 1 and a fibre core 2. A periodic structure in the form of corrugations 3 has been provided.

The corrugations 3 cause light propagating in the fibre to be scattered in a similar way to light scattered by a diffraction grating and light which strikes the corrugations 3 will be scattered into the cladding 1, into the atmosphere or in either direction along the fibre core 2.

The filter of Figure 1 accordingly acts as a one dimensional Bragg reflector and light of the wavelength which satisfies the Bragg Condition is reflected back along the guide at 180˚ to the original direction of propagation. The Bragg Condition will be satisfied at different wavelengths in dependance upon the period of the corrugations 3 thereby providing in the case shown a frequency selective rejection filter in which substantially all the incident power at a specific wavelength is reflected.

Referring now to Figure 2, the method of preparing the filter using a monomode fibre involves mounting the fibre 4 in a channel 6 of a silica block 5. The channel 6 has a slightly curved upper surface and, in practice the upper surface 7 of the block 6 may be curved, the channel 6 being scored therein.

Having mounted the fibre 4, the surface 7 and cladding 1 are lapped and polished to provide a flat surface as shown in Figure 2B in the same manner as used in the preparation of a known PHC. The fibre profile is thus changed to that of D-type fibre as shown in Figure 2F with the cladding polished away to expose a portion of the fibre core 2.

Having so prepared the fibre 4 a thin film 7 of index matched ultra violet curable adhesive, such as an acrylic epoxy adhesive (e.g. "Norland 65") or an acrylic silicone adhesive, is applied to the exposed core 2 of the fibre 4.

Using an accurate ultrasonic source 8 at a frequency calculated as hereinafter described a standing wave is caused to be set up in the, currently liquid, adhesive film 7. Having set up the standing wave, high intensity ultra violet light from a source 9 is used to effect a rapid cure of the adhesive film 7 thereby providing the required Bragg reflector.

It is here noted that during the curing period the frequency of the ultrasonic source 8 may be varied so that the standing wave varies slightly thereby providing a chirped structure which simulates a chirped diffraction grating. This allows production of "bandwidth" filters.

It will be appreciated, however, that using a stable ultrasonic source, filters having a very narrow bandwidth may be produced enabling accurate rejection of optical signals of a specific wavelength which may find use in demultiplexing wavelength division multiplexed (WDM) signals.

Referring again to Figure 1, it is known that the Bragg condition is satisfied when

$$\text{\Pi} = 2n_e D$$

where $\text{\Pi}$ is the wavelength of light in vacuum
$n_e$ is the effective refractive index of the waveguide and
D is the corrugation period.

When reflected light is incident at an angle $\phi$ then

$$n_e = n, \sin 2\,\hat{a}$$

where n, is the refractive index of the guide.

Thus in creating the aforementioned frequency selective rejection filter formation of the standing wave in the adhesive overlay 7 requires excitation of the liquid film at a predetermined frequency to create a corrugation having a specific period D. The required excitation frequency (F) is given by

$$F = \frac{c}{D}$$

where c is the speed of propagation of the wave in an overlay.

Since for fluid flow is a free surface film the surface pressure along the surface cannot vary from point to point then a disturbance of the fluid 7 will propagate as a surface wave not as a pressure wave.

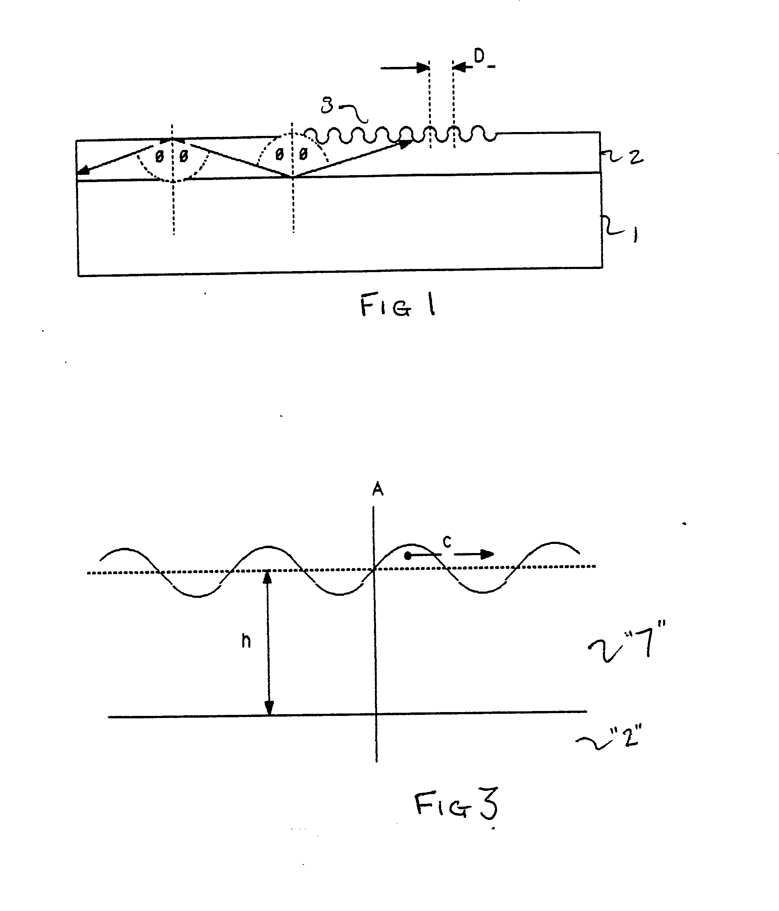

Referring then to Figure 3 and providing
C = wave propagation velocity and
h = mean adhesive film thickness with
Q = the flow through a section of unit width measured perpendicular to the direction of propation, in considering a vertical section through the film at 'A' where the excited depth equals the mean depth h then $C = \dfrac{Q}{h}$

Now as at any vertical section the total energy of the film is constant, gain in kinetic energy in the peak of the wave must equal the loss in potential energy in the trough. Therefore at A the total energy of the liquid (E) is given by

$$E = h + \frac{c^2}{2g}$$

$$\text{and since} \quad C = \frac{Q}{h}\,,$$

$$E = h + \frac{Q^2}{2gh^2}$$

As this applies at any section $\dfrac{dE}{dh} = 0$

therefore differentiating

$$\frac{dE}{dh} - 1 - \frac{2Q^2}{2gh^3} = 0$$

or since $\dfrac{Q}{h} = C$

$$1 - \dfrac{c^2}{gh} = 0$$

Thus $C = gh$

Using the above equations the required frequency of the source 8 for any required filter may be calculated.

Thus in a typical single mode (monomode) optical fibre the angle $\not{p}$ given by the critical angle for the core/cladding interface is given by

$$\hat{a} = \sin^{-1} \dfrac{n_2}{n1} \quad \text{(typically)} = \dfrac{1.456}{1.46}$$

Thus $\hat{a} = 85.76$

Accordingly from

$n_e = n1 \sin 2\hat{a}$ (above)
$n_e = 0.2154$

Now since $D = \dfrac{ll}{2ne}$

for wavelengths of, say, 1 550 nm and 1300 nm D is respectively 3.6?m and 3.01?m. Accordingly with an adhesive film thickness of 50?m

$c = gh = 9.81 \times 50E^{-6}$
$m/s = 22147?/s$
Now since $f = \dfrac{c}{D}$
$f = 6.152 \text{ kH}_z$ for a filter having a rejection wavelength of 1550 um

and $f = 7.358 \text{ kH}_z$ for a filter having a rejection wavelength of 1300 um.

It will be realised that the above examples are exemplary only to demonstrate calculations in respect of a particular fibre and particular frequencies.


**Claims**

1. A method of manufacturing an optical filter comprising the steps of lapping or polishing an optical fibre to expose a portion of fibre core, overlaying the exposed core portion with a curable adhesive, setting up a standing wave in the adhesive and rapidly curing the adhesive whereby a corrugated structure is provided.

2. A method according to Claim 1 wherein adhesive curable with ultra-violet light is overlayed on the exposed portion, the adhesive being cured by use of a high intensity ultra violet light source.

3. A method according to Claim 1 or Claim 2 wherein the standing wave is set up using an ultrasonic wave.

4. A method according to Claim 3 wherein the frequency of the ultrasonic wave is varied during the curing period whereby a chirped structure is provided.

5. An optical filter manufactured by the method of any one of Claims 1 to 4.

FIG 2A

FIG 2B

FIG 2C

FIG 2D.

FIG 2E

FIG 2F

UV

Fig 1

Fig 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | RADIO ENGINEERING AND ELECTRONIC PHYSICS, vol. 28, no. 5, May 1983, pages 149-156, Scripta Pub. Co., Silverspring Ma. US; A.F. BESSONOV et al.: "Waveguide-optical readout of signals in devices employing acoustic surface waves" <br> * Figure 1; page 149, lines 19-26; page 150, lines 1-5; page 154, lines 28-33 * <br> --- | 1,3 | G 02 B 6/34 |
| A | GB-A-2 096 344 (THE MARCONI CO., LTD) <br> * Figures 1,2; abstract; page 1, lines 91-100 * <br> --- | 1,3 | |
| A | EP-A-0 005 187 (SIEMENS AG) <br> * Figure 2; abstract; page 9, lines 23-30 * <br> --- | 3 | |
| A | EP-A-0 216 565 (PLESSEY OVERSEAS LTD) <br> * Figure 2; abstract; column 3, lines 62-65; column 4, lines 1-5,40-46 * <br> ----- | 1,2 | |

TECHNICAL FIELDS SEARCHED (Int. Cl.4)

G 02 B
H 01 S
G 02 F

The present search report has been drawn up for all claims

| Place of search | Date of completion of the search | Examiner |
|---|---|---|
| THE HAGUE | 05-12-1988 | VAN DOREMALEN,J.C.H. |